(19) Europäisches Patentamt
European Patent Office
Office européen des brevets

(11) Publication number: **0 275 556 B1**

(12) **EUROPEAN PATENT SPECIFICATION**

(45) Date of publication of patent specification: **15.04.92**

(51) Int. Cl.5: **A01N 39/04**, A01N 39/02, //(A01N39/04,37:32), (A01N39/02,37:32)

(21) Application number: **87119314.0**

(22) Date of filing: **29.12.87**

(54) **Herbicidal composition.**

(30) Priority: **22.01.87 JP 12847/87**
**27.02.87 JP 45962/87**

(43) Date of publication of application:
**27.07.88 Bulletin 88/30**

(45) Publication of the grant of the patent:
**15.04.92 Bulletin 92/16**

(84) Designated Contracting States:
**AT BE CH DE ES FR GB GR IT LI NL SE**

(56) References cited:
**EP-A- 0 061 741**
**EP-A- 0 181 628**

**CENTRAL PATENTS INDEX BASIC ABSTRACTS JOURNAL, section C, AGDOC, week 30, 19th September 1984, C047-185432/30, Derwent Publications, London, GB; & JP-A-84 104 301 (SUMITOMO CHEMICAL K.K.)**

(73) Proprietor: **SUMITOMO CHEMICAL COMPANY, LIMITED**
**Kitahama 4-chome 5-33**
**Chuo-ku Osaka 541(JP)**

(72) Inventor: **Hamada, Tatsuhiro**
**3-4-8-306, Mukomoto-machi**
**Amagasaki-shi Hyogo-ken(JP)**
Inventor: **Yoshida, Ryo**
**5-19, Azajizoyama Higashiueno**
**Kawanishi-shi Hyogo-ken(JP)**

(74) Representative: **Vossius & Partner**
**Siebertstrasse 4 P.O. Box 86 07 67**
**W-8000 München 86(DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).



Rank Xerox (UK) Business Services

## Description

The present invention relates to a herbicidal composition. More particularly, it relates to a novel composition producing a synergistic herbicidal effect.

The herbicidal composition of the invention comprises as the active ingredients (a) at least one of tetrahydrophthalimides of the general formula:

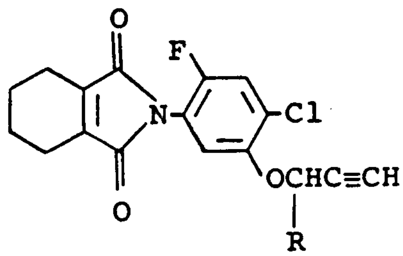

(I)

wherein R is a hydrogen atom or a methyl group (hereinafter referred to as "Compound(s) (I)") and (b) at least one of phenoxycarboxylic acids of the general formula:

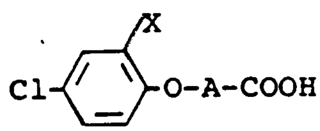

(II)

wherein X is a chlorine atom or a methyl group and A is $-CH_2-$,

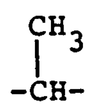

or $-(CH_2)_3-$, and their salts and esters (hereinafter referred to as "Compound(s) (II)") and exerts a highly enhanced herbicidal activity against a wide variety of weeds without causing any material phytotoxicity to crop plants (e.g. wheat, barley).

Examples of the salts of the carboxylic acid (II) are alkali metal salts (e.g. sodium, potassium, lithium salts), ammonium salts (e.g. dimethylammonium, diethanolammonium, triethanolanmonium salts), etc. Examples of the esters of the carboxylic acid (II) are alkyl esters (e.g. ethyl, isopropyl, butyl, sec-butyl, isobutyl, octyl, isooctyl, 2-ethylbutyl, 2-ethylhexyl esters), alkenyl esters (e.g. allyl ester), alkoxyalkyl esters (e.g. butoxyethyl, butoxypropyl ester), hydroxyalkoxyalkyl esters (e.g. hydroxypropoxybutyl ester), etc.

In recent years, there have been used a great number of chemicals having herbicidal activities in order to exterminate or control undesired vegetation of weeds in agricultural and non-agricultural fields. Since, however, weeds are diversified in kinds and grow over a long period of time, the herbicidal effects of conventional herbicidal agents are restricted in general. Under the circumstances, the appearance of any herbicidal agent exerting a strong herbicidal activity as well as a broad herbicidal spectrum over a wide variety of weeds has been highly demanded.

In EP-A-61 741 tetrahydrophthalimide derivatives of the general formula

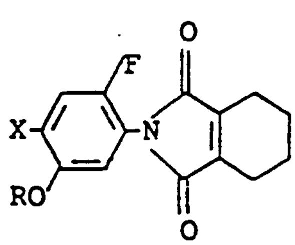

are described, wherein X is chlorine or bromine and R is a $C_1$-$C_8$ alkyl group, a $C_3$-$C_4$ alkenyl group or $C_3$-$C_4$ alkynyl group. The tetrahydrophthalimides may be used together with other herbicides to improve their activity as herbicides, and in some cases a synergistic effect can be expected.

However, no specific herbicide to be used in combination with the tetrahydrophthalimides is disclosed.

Tetrahydrophthalimides of the general formula

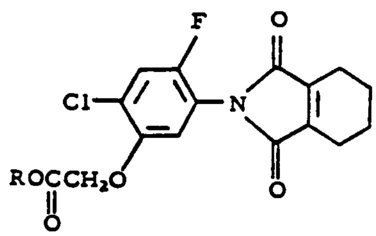

wherein R is lower alkyl, cycloalkyl or halo lower alkyl, are known to show synergistic herbicidal activity with specific phenoxy propionc acid derivatives from JP-A-84 104 301, with s-triazine derivatives from JP-A-84 095 204 or with specific phenoxynitrobenzoate derivatives or an imidazole-quinoline derivative from EP-A-181 628, if R is n-$C_5H_{11}$. The tetrahydro-phthalimides and in particular the "second herbicidal components" differ from the two herbicidal components used in the present invention.

EP-A-198 298 discloses synergistic herbicidal compositions comprising as active ingredients a tetrahydrophthalimide of the general formula I of the present invention and an s-triazine. The second component is totally different from compounds II of the present invention.

As a result of the extensive study, it has now been found that the associated use of (a) at least one of Compounds (I) with (b) at least one of Compounds (II) produces a highly enhanced herbicidal activity against a wide variety of weeds in agricultural and non-agricultural fields. In comparison with the sole use of each of said active ingredients, enhancement of the herbicidal potency on such associated use is remarkable so that the active ingredients may be applied in a smaller dosages. Further, the weed-control spectrum is greatly enlarged. Thus, a clear and definite synergistic effect is observed in said associated use.

The herbicidal composition of the invention can exterminate or control a variety of weeds such as catchweed bedstraw (Galium aparine), common chickweed (Stellaria media), persian speedwell (Veronica persica), field pansy (Viola arvensis), scentless chamomile (Matricaria perforata), pineappleweed (Matricaria matricarioides), wild mustard (Sinapis arvensis), purple deadnettle (Lamium purpureum), Canada thistle (Cirsium arvense), field pennycress (Thlaspi arvense), forget-me-not (Myosotis arvensis), ladysthumb (Polygonum persicaria), pale smartweed (Polygonum lapathifolium), wild buckwheat (Polygonum convolvulus), field bindweed (Convolvulus arvensis), common lambsquarters (Chenopodium album), redroot pigweed (Amaranthus retroflexus) and black nightshade (Solanum nigrum), etc. Particularly, it is notable that the herbicidal composition according to the invention can exterminate hard-to-control weeds such as catchweed bedstraw, common chickweed, persian speedwell, field pansy, ladysthumb, pale smartweed, wild buckwheat and wild mustard all together.

Compounds (I), which cover specifically the following two compounds:

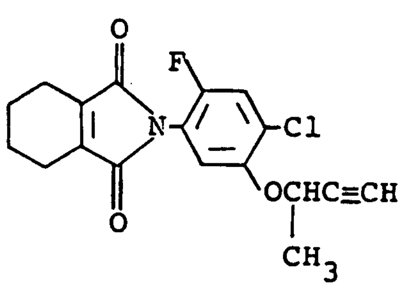

Compound (1)

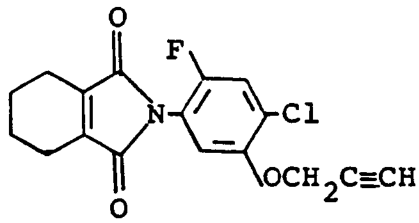

Compound (2)

are per se known to exert a herbicidal activity (EP-0061741A). Compound(s) (II) cover specifically the following six compounds:

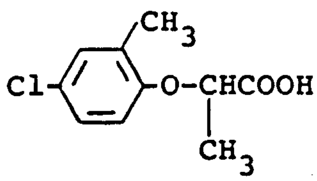

(mecoprop)

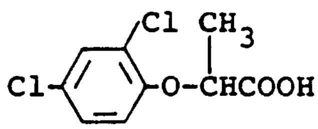

(dichlorprop)

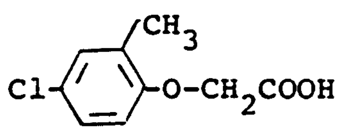

(MCPA)

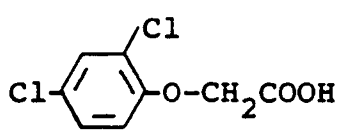

(2,4-D)

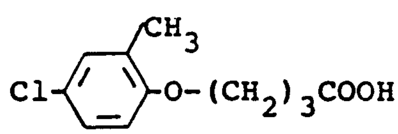

(MCPB)

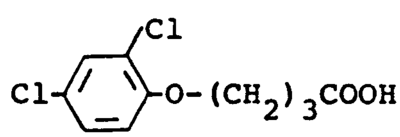

(2,4-DB)

, and they are also known as herbicides (C.R. Worthing et al: The Pesticide Manual, 7 Ed, 345, 184, 341, 153, 343, 158 (1983) published by The British Crop Protection Council). However, their associated use has never been attempted, and the production of said synergistic effect on such associated use has never been expected.

The proportion of Compound(s) (I) as the component (a) and Compound(s) (II) as the component (b) in the composition of the invention may vary in a considerably broad range and is usually within a range of about 1 : 1 - 10,000 by weight, preferably about 1 : 3 - 3,000 by weight.

In addition to the above active ingredients, the composition may contain a solid or liquid carrier or diluent. Any surface active or auxiliary agent may also be contained therein. Thus, the composition may be

formulated in any conventional preparation form such as emulsifiable concentrate, wettable powder, suspension or granules The total content of the active ingredients, i.e. Compound(s) (I) and Compound(s) (II), may be from about 0.5 to 90 % by weight, preferably from about 2 to 80 % by weight.

As the solid carrier or diluent, there may be used kaolin clay, attapulgite clay, bentonite, terra alba, pyrophyllite, talc, diatomaceous earth, calcite, wallnut-shell powder, urea, ammonium sulfate, synthetic hydrated silica, etc. Examples of the liquid carrier or diluent are aromatic hydrocarbons (e.g. xylene, methylnaphthalene), alcohols (e.g. isopropanol, ethylene glycol, cellosolve), ketones (e.g. acetone, cyclohexanone, isophorone), vegetable oils (e.g. soybean oil, cotton-seed oil), dimethylsulfoxide, acetontitrile, water, etc.

The surface active agent used for emulsification, dispersion or spreading may be of any type such as anionic type or nonionic type. Examples of the surface active agent include alkylsulfates, alkylarylsulfonates, dialkylsulfosuccinates, phosphates of polyoxyethylenealkylaryl ethers, polyoxyethylene alkyl ethers, polyoxyethylene alkylaryl ethers, polyoxyethylene polyoxypropylene block copolymers, sorbitan fatty acid esters, polyoxyethylene sorbitan fatty acid esters, etc. Examples of the auxiliary agents include ligninsulfonates, sodium alginate, polyvinyl alcohol, gum arabic, CMC (carboxymethyl cellulose), PAP (isopropyl acid phosphate), etc.

Practical embodiments of the composition are illustratively shown in the following Formulation Examples wherein part(s) are by weight.

Formulation Example 1

0.25 Part of Compound (1), 50 parts of 2,4-D (sodium salt), 10 parts of synthetic hydrated silica, 3 parts of alkylsulfate, 2 parts of calcium ligninsulfonate and 34.75 parts of diatomaceous earth are well mixed and pulverized to obtain a wettable powder.

Formulation Example 2

0.8 Part of Compound (2), 79.2 parts of MCPA (ethyl ester), 3 parts of calcium ligninsulfonate, 2 parts of sodium laurylsulfate and 15 parts of synthetic hydrated silica are well mixed and pulverized to obtain a wettable powder.

Formulation Example 3

0.1 Part of Compound (1) are pulverized in 0.3 parts of 5 % aqueous polyvinyl alcohol solution until the particle size becomes less than 5 microns and mixed with 40 parts of 50 % aqueous solution of mecoprop (potassium salt). The resulting mixture is admixed with 59.6 parts of 6 % aqueous surfactant ("AEROSIL No. 200" manufactured by Nihon Aerosil Co.) and stirred to make a suspension.

Formulation Example 4

0.1 Part of Compound (2) are pulverized in 0.3 part of 5 % aqueous polyvinyl alcohol solution until the particle size becomes less than 5 microns and mixed with 40 parts of 50 % aqueous solution of dichlorprop (potassium salt). The resulting mixture is admixed with 59.6 parts of 6 % aqueous surfactant ("AEROSIL No. 200" manufactured by Nihon Aerosil Co.) and stirred to make a suspension.

Formulation Example 5

0.5 Part of Compound (1), 50 parts of 2,4-DB (sodium salt), 3 parts of calcium ligninsulfonate, 2 parts of sodium laurylsulfate and 44.5 parts of synthetic hydrated silica are well mixed and pulverized to obtain a wettable powder.

Formulation Example 6

One part of Compound (2), 50 parts of MCPB (ethyl ester), 3 parts of calcium ligninsulfonate, 2 parts of sodium laurylsulfate and 44 parts of synthetic hydrated silica are well mixed and pulverized to obtain a wettable powder.

Formulation Example 7

One part of Compound (1), 50 parts of mecoprop (potassium salt), 3 parts of calcium ligninsulfonate, 2 parts of sodium laurylsulfate and 44 parts of synthetic hydrateed silica are well mixed and pulverized to obtain a wettable powder.

Formulation Example 8

One part of Compound (1), 50 parts of 2,4-D (sodium salt), 3 parts of calcium ligninsulfonate, 2 parts of sodium laurylsulfate and 44 parts of synthetic hydrateed silica are well mixed and pulverized to obtain a wettable powder.

Formulation Example 9

One part of Compound (2), 50 parts of dichlorprop (potassium salt), 3 parts of calcium ligninsulfonate, 2 parts of sodium laurylsulfate and 44 parts of synthetic hydrateed silica are well mixed and pulverized to obtain a wettable powder.

Formulation Example 10

One part of Compound (1), 50 parts of MCPB (ethyl ester), 3 parts of calcium ligninsulfonate, 2 parts of sodium laurylsulfate and 44 parts of synthetic hydrateed silica are well mixed and pulverized to obtain a wettable powder.

A composition comprising Compound(s) (I) and Compound(s) (II) thus formulated is useful for post-emergence control of undesired weeds by foliar treatment. The foliar treatment may be effected by spraying the composition containing Compound(s) (I) and Compound(s) (II) over the top of plants. Directed application may also be adopted.

In order to improve the herbicidal activity, the composition may be used with any other herbicides. Besides, it may be used in combination with insecticides, acaricides, nematocides, fungicides, plant growth regulators, fertilizers, soil improvers, etc.

The composition of the invention is widely used as a herbicide applicable in plowed field, non-cropping land, orchards, pasture land, lawn, forest, non-agricultural fields, etc.

The dosage of the active ingredients may vary depending on prevailing weather condition, soil involved, formulation used, mixing proportion of each active ingredient, crop and weed species, etc. In general, however, the total amount of Compound(s) (I) and Compound(s) (II) may be within a range of about 10 to 10,000 grams per hectare. In case of the composition being in the form of emulsifiable concentrate, wettable powder, suspension or the like, it is normally diluted with water and then applied at a volume of about 100 to 1,000 liters per hectare to the area where extermination of weeds is desired. The composition in the of granules, etc. is normally used as such.

The herbicidal activity of the composition of the invention will be explained in further detail with reference to the following Test Examples wherein the growth control percentage (%) was determined by weighting the aerial parts of the test plants (fresh weight) and making calculation according to the following equation:

$$\text{Growth control percentage (\%)} = \left\{ 1 - \frac{\text{Fresh weight of test plant in treated plot}}{\text{Fresh weight of test plant in untreated plot}} \right\} \times 100$$

The phytotoxicity to crop plants was visually observed.

Test Example 1

Seeds of wheat, barley, catchweed bedstraw, common chickweed, field pansy, ladysthumb, persian speedwell, wild mustard, pineappleweed and common lambsquarters were sowed in a vat (area, 33 × 22 $cm^2$; height, 11 cm) filled with upland field soil, followed by cultivation outdoors. A designated amount of the composition in the form of a wettable powder formulated according to Formulation Example 2, 7, 8 or 9 was diluted with water and sprayed to the foliage of the test plants at a spray volume of 500 liters per hectare

by the aid of a small hand sprayer. After 35 days' cultivation outdoors, the phytotoxicity and the growth control percentage were observed. The results are shown in Tables 1 and 2. At the time of treatment, the test plants were in general at the 1 to 6-leaf stage and had a height of 1 to 15 cm, although the growing stage varied depending on each species.

Table 1

| Compound No. | Dosage (g/ha) | Mixing ratio (by weight) | Phytotoxicity | | Growth controlling percentage (%) | | | | | | | |
|---|---|---|---|---|---|---|---|---|---|---|---|---|
| | | | Wheat | Barley | Catchweed bedstraw | Common chickweed | Field pansy | Ladysthumb | Persian speedwell | Wild mustard | Pineapple weed | Common lambsquarters |
| (1) | 8 | - | None | None | 95 | 80 | 100 | 95 | 96 | 85 | 79 | 93 |
| | 16 | - | None | None | 100 | 92 | 100 | 100 | 100 | 93 | 91 | 100 |
| Mecoprop (K salt) | 800 | - | None | None | 93 | 86 | 32 | 54 | 0 | 95 | 48 | 95 |
| | 1600 | - | None | None | 100 | 100 | 67 | 77 | 25 | 100 | 78 | 100 |
| (1) + Mecoprop (K salt) | 8 + 800 | 1:100 | None | None | 100 | 97 | 100 | 100 | 100 | 100 | 95 | 100 |
| | 16 + 800 | 1: 50 | None | None | 100 | 100 | 100 | 100 | 100 | 100 | 100 | 100 |
| | 8 + 1600 | 1:200 | None | None | 100 | 100 | 100 | 100 | 100 | 100 | 100 | 100 |
| | 16 + 1600 | 1:100 | None | None | 100 | 100 | 100 | 100 | 100 | 100 | 100 | 100 |
| 2,4-D (Na salt) | 800 | - | None | None | 20 | 82 | 45 | 78 | 58 | 93 | 78 | 100 |
| | 1600 | - | None | None | 20 | 93 | 73 | 100 | 82 | 100 | 90 | 100 |
| (1) + 2,4-D (Na salt) | 8 + 800 | 1:100 | None | None | 100 | 100 | 100 | 100 | 100 | 100 | 97 | 100 |
| | 16 + 800 | 1: 50 | None | None | 100 | 100 | 100 | 100 | 100 | 100 | 100 | 100 |
| | 8 + 1600 | 1:200 | None | None | 100 | 100 | 100 | 100 | 100 | 100 | 100 | 100 |
| | 16 + 1600 | 1:100 | None | None | 100 | 100 | 100 | 100 | 100 | 100 | 100 | 100 |

Table 2

| Compound No. | Dosage (g/ha) | Mixing ratio (by weight) | Phytotoxicity: Wheat | Phytotoxicity: Barley | Growth controlling percentage (%): Catchweed bedstraw | Common chickweed | Field pansy | Ladysthumb | Persian speedwell | Wild mustard | Pineapple weed | Common lambsquarters |
|---|---|---|---|---|---|---|---|---|---|---|---|---|
| (2) | 8 | - | None | None | 89 | 92 | 95 | 97 | 95 | 87 | 75 | 96 |
| | 16 | - | None | None | 98 | 100 | 100 | 100 | 100 | 95 | 90 | 100 |
| MCPA (ethyl ester) | 800 | - | None | None | 11 | 76 | 41 | 73 | 50 | 100 | 75 | 100 |
| | 1600 | - | None | None | 29 | 90 | 70 | 95 | 77 | 100 | 92 | 100 |
| (2) + MCPA (ethyl ester) | 8 + 800 | 1:100 | None | None | 96 | 99 | 100 | 100 | 100 | 100 | 95 | 100 |
| | 16 + 800 | 1: 50 | None | None | 100 | 100 | 100 | 100 | 100 | 100 | 100 | 100 |
| | 8 + 1600 | 1:200 | None | None | 99 | 100 | 100 | 100 | 100 | 100 | 100 | 100 |
| | 16 + 1600 | 1:100 | None | None | 100 | 100 | 100 | 100 | 100 | 100 | 100 | 100 |
| Dichlorprop (K salt) | 800 | - | None | None | 97 | 95 | 40 | 79 | 43 | 99 | 95 | 100 |
| | 1600 | - | None | None | 100 | 100 | 63 | 92 | 80 | 100 | 100 | 100 |
| (2) + Dichlorprop (K salt) | 8 + 800 | 1:100 | None | None | 100 | 100 | 100 | 100 | 100 | 100 | 99 | 100 |
| | 16 + 800 | 1: 50 | None | None | 100 | 100 | 100 | 100 | 100 | 100 | 100 | 100 |
| | 8 + 1600 | 1:200 | None | None | 100 | 100 | 100 | 100 | 100 | 100 | 100 | 100 |
| | 16 + 1600 | 1:100 | None | None | 100 | 100 | 100 | 100 | 100 | 100 | 100 | 100 |

## Test Example 2

Seeds of wheat, barley, shepherdspurse, annual sowthistle (Sonchus oleraceus), purple deadnettle, field pansy, prostrate knotweed (Polygonum aviculare), persian speedwell and common chickweed were sowed

in a vat (area, 33 × 23 $cm^2$; height, 11 cm) filled with upland field soil, followed by cultivation outdoors. A designated amount of the composition in the form of a wettable powder formulated according to Formulation Example 5 or 10 was diluted with water and sprayed to the foliage of the test plant at a spray volume of 500 liters per hectare by the aid of a small hand sprayer. After 35 days' cultivation outdoors, the phytotoxicity and the growth control percentage were observed. The results are shown in Table 3. At the time of treatment, the test plants were in general at the 1 to 4-leaf stage and had a height of 2 to 25 cm, although the growing stage varied depending on each species.

Table 3

| Compound No. | Dosage (g/ha) | Mixing ratio (by weight) | Phyto-toxicity | | Growth controlling percentage (%) | | | | | | |
|---|---|---|---|---|---|---|---|---|---|---|---|
| | | | Wheat | Barley | Shepherds-purse | Annual sow-thistle | Purple dead-nettle | Field pansy | Prostrate knotweed | Persian speed-well | Common chick-weed |
| (1) | 8<br>16 | -<br>- | None<br>None | None<br>None | 78<br>89 | 96<br>100 | 91<br>99 | 95<br>100 | 78<br>84 | 98<br>100 | 85<br>94 |
| MCPB (ethyl ester) | 1000<br>2000 | -<br>- | None<br>None | None<br>None | 90<br>98 | 92<br>100 | 63<br>76 | 83<br>90 | 90<br>97 | 32<br>55 | 43<br>65 |
| (1) + MCPB (ethyl ester) | 8 + 1000<br>16 + 1000<br>8 + 2000<br>16 + 2000 | 1 : 125<br>1 : 62.5<br>1 : 250<br>1 : 125 | None<br>None<br>None<br>None | None<br>None<br>None<br>None | 99<br>100<br>100<br>100 | 100<br>100<br>100<br>100 | 100<br>100<br>100<br>100 | 100<br>100<br>100<br>100 | 99<br>100<br>100<br>100 | 100<br>100<br>100<br>100 | 95<br>100<br>100<br>100 |
| 2,4-DB (Na salt) | 1000<br>2000 | -<br>- | None<br>None | None<br>None | 92<br>99 | 43<br>69 | 59<br>73 | 58<br>79 | 85<br>96 | 66<br>85 | 84<br>94 |
| (1) + 2,4-DB (Na salt) | 8 + 1000<br>16 + 1000<br>8 + 2000<br>16 + 2000 | 1 : 125<br>1 : 62.5<br>1 : 250<br>1 : 125 | None<br>None<br>None<br>None | None<br>None<br>None<br>None | 100<br>100<br>100<br>100 | 100<br>100<br>100<br>100 | 100<br>100<br>100<br>100 | 100<br>100<br>100<br>100 | 98<br>100<br>100<br>100 | 100<br>100<br>100<br>100 | 99<br>100<br>100<br>100 |

Test Example 3

Seeds of pineappleweed were sowed in a vat (area, 33 × 23 $cm^2$; height, 11 cm) filled with upland field soil and cultivated outdoors for 40 days. A designated amount of the composition in the form of a

suspension formulated according to Formulation Example 3 was diluted with water and sprayed to the foliage of the test plant at a spray volume of 500 liters per hectare by the aid of a small hand sprayer. After 35 day's cultivation outdoors, the growth control percentage was observed. The results are shown in Table 4. At the time of treatment, the test plant was at the 5-leaf stage and had a height of 3 cm.

Table 4

| Compound No. | Dosage (g/ha) | Mixing ratio (by weight) | Growth control percentage of pineappleweed (%) |
|---|---|---|---|
| (1) | 2 | - | 23 |
| | 4 | - | 45 |
| | 8 | - | 72 |
| | 16 | - | 85 |
| | 32 | - | 93 |
| Mecoprop (K salt) | 400 | - | 20 |
| | 800 | - | 43 |
| | 1600 | - | 71 |
| | 3200 | - | 89 |
| | 6400 | - | 95 |
| (1) + Mecoprop (K salt) | 2 + 400 | 1 : 200 | 57 |
| | 2 + 800 | 1 : 400 | 74 |
| | 2 + 1600 | 1 : 800 | 85 |
| | 2 + 3200 | 1 : 1600 | 93 |
| | 2 + 6400 | 1 : 3200 | 99 |
| | 4 + 400 | 1 : 100 | 68 |
| | 4 + 800 | 1 : 200 | 88 |
| | 4 + 1600 | 1 : 400 | 100 |
| | 4 + 3200 | 1 : 800 | 100 |
| | 8 + 400 | 1 : 50 | 91 |
| | 8 + 800 | 1 : 100 | 96 |
| | 8 + 1600 | 1 : 200 | 100 |
| | 8 + 3200 | 1 : 400 | 100 |
| | 16 + 400 | 1 : 25 | 94 |
| | 16 + 800 | 1 : 50 | 100 |
| | 16 + 1600 | 1 : 100 | 100 |
| | 16 + 3200 | 1 : 200 | 100 |
| | 32 + 400 | 1 : 12.5 | 98 |
| | 32 + 800 | 1 : 25 | 100 |

Test Example 4

Seeds of common chickweed were sowed in a vat (area, 33 × 23 $cm^2$; height, 11 cm) filled with upland field soil and cultivated outdoors for 40 days. A designated amount of the composition in the form of a suspension formulated according to Formulation Example 3 was diluted with water and sprayed to the foliage of the test plant at a spray volume of 500 liters per hectare by the aid of a small hand sprayer. After 35 days' cultivation outdoors, the growth control percentage was observed. The results are shown in Table 5. At the time of treatment, the test plant was at the 5-leaf stage and had a height of 7 to 9 cm.

Table 5

| Compound No. | Dosage (g/ha) | Mixing ratio (by weight) | Growth control percentage of common chick-weed (%) |
|---|---|---|---|
| (1) | 2 | - | 40 |
| | 4 | - | 62 |
| | 8 | - | 78 |
| | 16 | - | 89 |
| | 32 | - | 96 |
| Mecoprop (K salt) | 100 | - | 31 |
| | 200 | - | 56 |
| | 400 | - | 79 |
| | 800 | - | 90 |
| | 1600 | - | 99 |
| (1) + Mecoprop (K salt) | 2 + 100 | 1 : 50 | 75 |
| | 2 + 200 | 1 : 100 | 88 |
| | 2 + 400 | 1 : 200 | 91 |
| | 2 + 800 | 1 : 400 | 98 |
| | 2 + 1600 | 1 : 800 | 100 |
| | 4 + 100 | 1 : 25 | 80 |
| | 4 + 200 | 1 : 50 | 95 |
| | 4 + 400 | 1 : 100 | 100 |
| | 4 + 800 | 1 : 200 | 100 |
| | 4 + 1600 | 1 : 400 | 100 |
| | 8 + 100 | 1 : 12.5 | 88 |
| | 8 + 200 | 1 : 25 | 100 |
| | 8 + 400 | 1 : 50 | 100 |
| | 8 + 800 | 1 : 100 | 100 |
| | 16 + 100 | 1 : 6.25 | 96 |
| | 16 + 200 | 1 : 12.5 | 100 |
| | 16 + 400 | 1 : 25 | 100 |
| | 16 + 800 | 1 : 50 | 100 |
| | 32 + 100 | 1 : 3.125 | 99 |
| | 32 + 200 | 1: 6.25 | 100 |

Test Example 5

Seeds of wild mustard were sowed in a vat (area, 33 × 23 $cm^2$; height, 11 cm) filled with upland field soil and cultivated outdoors for 40 days. A designated amount of the composition in the form of a wettable powder formulated according to Formuration Example 1 was diluted with water and sprayed to the foliage of the test plant at a spray volume of 500 liters per hectare by the aid of a small hand sprayer. After 35 days' cultivation outdoors, the growth control percentage was observed. The results are shown in Table 6. At the time of treatment, the test plant was at the 5-leaf stage and had a height of 7 to 10 cm.

Table 6

| Compound No. | Dosage (g/ha) | Mixing ratio (by weight) | Growth control percentage of wild mustard (%) |
|---|---|---|---|
| (1) | 2 | - | 30 |
| | 4 | - | 52 |
| | 8 | - | 74 |
| | 16 | - | 85 |
| | 32 | - | 93 |
| 2,4-D (Na salt) | 250 | - | 23 |
| | 500 | - | 52 |
| | 1000 | - | 80 |
| | 2000 | - | 91 |
| | 4000 | - | 100 |
| (1) + 2,4-D (Na salt) | 2 + 250 | 1 : 125 | 55 |
| | 2 + 500 | 1 : 250 | 72 |
| | 2 + 1000 | 1 : 500 | 91 |
| | 2 + 2000 | 1 : 1000 | 96 |
| | 2 + 4000 | 1 : 2000 | 100 |
| | 4 + 250 | 1 : 63 | 71 |
| | 4 + 500 | 1 : 125 | 87 |
| | 4 + 1000 | 1 : 250 | 98 |
| | 4 + 2000 | 1 : 500 | 100 |
| | 4 + 4000 | 1 : 1000 | 100 |
| | 8 + 250 | 1 : 31 | 84 |
| | 8 + 500 | 1 : 63 | 98 |
| | 8 + 1000 | 1 : 125 | 100 |
| | 8 + 2000 | 1 : 250 | 100 |
| | 16 + 250 | 1 : 16 | 90 |
| | 16 + 500 | 1 : 31 | 98 |
| | 16 + 1000 | 1 : 63 | 100 |
| | 16 + 2000 | 1 : 125 | 100 |
| | 32 + 250 | 1 : 8 | 97 |
| | 32 + 500 | 1 : 16 | 100 |

Test Example 6

Seeds of persian speedwell were sowed in a vat (area, 33 × 23 $cm^2$; height, 11 cm) filled with upland field soil and cultivated outdoors for 40 days. A designated amount of the composition in the form of a wettable powder formulated according to Formulation Example 2 was diluted with water and sprayed to the foliage of the test plant at a spray volume of 500 liters per hectare by the aid of a small hand sprayer. After 35 days' cultivation outdoors, the growth control percentage was observed. The results are shown in Table 7. At the time of treatment, the test plant was at the 2 to 3-leaf stage and had a height of 2 cm.

Table 7

| Compound No. | Dosage (g/ha) | Mixing ratio (by weight) | Growth control percentage of persian speedwell (%) |
|---|---|---|---|
| (2) | 2 | - | 38 |
| | 4 | - | 63 |
| | 8 | - | 81 |
| | 16 | - | 94 |
| | 32 | - | 100 |
| MCPA (ethyl ester) | 250 | - | 25 |
| | 500 | - | 48 |
| | 1000 | - | 70 |
| | 2000 | - | 90 |
| | 4000 | - | 99 |
| (2) + MCPA (ethyl ester) | 2 + 250 | 1 : 125 | 76 |
| | 2 + 500 | 1 : 250 | 79 |
| | 2 + 1000 | 1 : 500 | 91 |
| | 2 + 2000 | 1 : 1000 | 98 |
| | 2 + 4000 | 1 : 2000 | 100 |
| | 4 + 250 | 1 : 63 | 85 |
| | 4 + 500 | 1 : 125 | 100 |
| | 4 + 1000 | 1 : 250 | 100 |
| | 4 + 2000 | 1 : 500 | 100 |
| | 4 + 4000 | 1 : 1000 | 100 |
| | 8 + 250 | 1 : 31 | 100 |
| | 8 + 500 | 1 : 63 | 100 |
| | 8 + 1000 | 1 : 125 | 100 |
| | 8 + 2000 | 1 : 250 | 100 |
| | 16 + 250 | 1 : 16 | 100 |
| | 16 + 500 | 1 : 31 | 100 |
| | 16 + 1000 | 1 : 63 | 100 |
| | 16 + 2000 | 1 : 125 | 100 |
| | 32 + 250 | 1 : 8 | 100 |
| | 32 + 500 | 1 : 16 | 100 |

Test Example 7

Seeds of catchweed bedstraw were sowed in a vat (area, 33 × 23 $cm^2$; height, 11 cm) filled with upland field soil and cultivated outdoors for 30 days. A designated amount of the composition in the form of a wettable powder formulated according to Formulation Example 7 was diluted with water and sprayed to the foliage of the test plant at a spray volume of 500 liters per hectare by the aid of a small hand sprayer. After 35 days' cultivation outdoors, the growth control percentage was observed. The results are shown in Table 8. At the time of treatment, the test plant was at the 2-leaf stage and had a height of 5 to 9 cm.

Table 8

| Compound No. | Dosage (g/ha) | Mixing ratio (by weight) | Growth control percentage of catchweed bedstraw (%) |
|---|---|---|---|
| (1) | 1 | - | 36 |
| | 2 | - | 50 |
| | 4 | - | 73 |
| | 8 | - | 92 |
| | 16 | - | 100 |
| Mecoprop (K salt) | 100 | - | 22 |
| | 200 | - | 45 |
| | 400 | - | 73 |
| | 800 | - | 93 |
| | 1600 | - | 100 |
| (1) + Mecoprop (K salt) | 1 + 100 | 1 : 100 | 62 |
| | 1 + 200 | 1 : 200 | 74 |
| | 1 + 400 | 1 : 400 | 88 |
| | 1 + 800 | 1 : 800 | 100 |
| | 1 + 1600 | 1 : 1600 | 100 |
| | 2 + 100 | 1 : 50 | 67 |
| | 2 + 200 | 1 : 100 | 82 |
| | 2 + 400 | 1 : 200 | 94 |
| | 2 + 800 | 1 : 400 | 100 |
| | 2 + 1600 | 1 : 800 | 100 |
| | 4 + 100 | 1 : 25 | 84 |
| | 4 + 200 | 1 : 50 | 92 |
| | 4 + 400 | 1 : 100 | 100 |
| | 4 + 800 | 1 : 200 | 100 |
| | 8 + 100 | 1 : 12.5 | 96 |
| | 8 + 200 | 1 : 25 | 100 |
| | 8 + 400 | 1 : 50 | 100 |
| | 8 + 800 | 1 : 100 | 100 |
| | 16 + 100 | 1 : 6.25 | 100 |
| | 16 + 200 | 1 : 12.5 | 100 |

Test Example 8

Seeds of shepherdspurse were sowed in a vat (area, 33 × 23 $cm^2$; height, 11 cm) filled with upland field soil and cultivated outdoors for 20 days. A designated amount of the composition in the form of a wettable powder formulated according to Formulation Example 6 was diluted with water and sprayed to the foliage of the test plant at a spray volume of 500 liters per hectare by the aid of a small hand sprayer. After 35 days' cultivation outdoors, the growth control percentage was observed. The results are shown in Table 9. At the time of treatment, the test plant was at the 1 to 2-leaf stage and had a height of 1 to 2 cm.

Table 9

| Compound No. | Dosage (g/ha) | Mixing ratio (by weight) | Growth control percentage of shepherds-purse (%) |
|---|---|---|---|
| (2) | 2 | - | 24 |
| | 4 | - | 52 |
| | 8 | - | 78 |
| | 16 | - | 89 |
| | 32 | - | 96 |
| MCPB (ethyl ester) | 125 | - | 21 |
| | 250 | - | 47 |
| | 500 | - | 79 |
| | 1000 | - | 90 |
| | 2000 | - | 98 |
| (2) + MCPB (ethyl ester) | 2 + 125 | 1 : 63 | 48 |
| | 2 + 250 | 1 : 125 | 70 |
| | 2 + 500 | 1 : 250 | 91 |
| | 2 + 1000 | 1 : 500 | 94 |
| | 2 + 2000 | 1 : 1000 | 100 |
| | 4 + 125 | 1 : 31 | 68 |
| | 4 + 250 | 1 : 63 | 86 |
| | 4 + 500 | 1 : 125 | 98 |
| | 4 + 1000 | 1 : 250 | 100 |
| | 4 + 2000 | 1 : 500 | 100 |
| | 8 + 125 | 1 : 16 | 86 |
| | 8 + 250 | 1 : 31 | 97 |
| | 8 + 500 | 1 : 63 | 100 |
| | 8 + 1000 | 1 : 125 | 100 |
| | 16 + 125 | 1 : 8 | 93 |
| | 16 + 250 | 1 : 16 | 99 |
| | 16 + 500 | 1 : 31 | 100 |
| | 32 + 125 | 1 : 4 | 99 |
| | 32 + 250 | 1 : 8 | 100 |

Test Example 9

Seeds of purple deadnettle were sowed in a vat (area, 33 × 23 $cm^2$; height, 11 cm) filled with upland field soil and cultivated outdoors for 20 days. A designated amount of the composition in the form of a wettable powder formulated according to Formulation Example 5 was diluted with water and sprayed to the foliage of the test plant at a spray volume of 500 liters per hectare by the aid of a small hand sprayer. After 35 days' cultivation outdoors, the growth control percentage was observed. The results are shown in Table 10. At the time of treatment, the test plant was at the 1 to 2-leaf stage and had a height of 2 to 4 cm.

Table 10

| Compound No. | Dosage (g/ha) | Mixing ratio (by weight) | Growth control percentage of purple dead-nettle (%) |
|---|---|---|---|
| (1) | 1 | - | 29 |
| | 2 | - | 55 |
| | 4 | - | 81 |
| | 8 | - | 91 |
| | 16 | - | 99 |
| 2,4-DB (Na salt) | 500 | - | 33 |
| | 1000 | - | 63 |
| | 2000 | - | 76 |
| | 4000 | - | 94 |
| | 8000 | - | 100 |
| (1) + 2,4-DB (Na salt) | 1 + 500 | 1 : 500 | 57 |
| | 1 + 1000 | 1 : 1000 | 81 |
| | 1 + 2000 | 1 : 2000 | 87 |
| | 1 + 4000 | 1 : 4000 | 98 |
| | 1 + 8000 | 1 : 8000 | 100 |
| | 2 + 500 | 1 : 250 | 75 |
| | 2 + 1000 | 1 : 500 | 90 |
| | 2 + 2000 | 1 : 1000 | 96 |
| | 2 + 4000 | 1 : 2000 | 100 |
| | 2 + 8000 | 1 : 4000 | 100 |
| | 4 + 500 | 1 : 125 | 89 |
| | 4 + 1000 | 1 : 250 | 98 |
| | 4 + 2000 | 1 : 500 | 100 |
| | 4 + 4000 | 1 : 1000 | 100 |
| | 8 + 500 | 1 : 63 | 97 |
| | 8 + 1000 | 1 : 125 | 100 |
| | 8 + 2000 | 1 : 250 | 100 |
| | 16 + 500 | 1 : 31 | 100 |
| | 16 + 1000 | 1 : 63 | 100 |

The results in Test Examples 3, 4, 5, 6, 7, 8 and 9 were analyzed according to the isobole (i.e. equivalent efficacy line) method [Vol. 3, Herbicides, pages 109 - 111 (1981) in "Noyaku Jikkenho" (Methods in Pesticide Science) edited by Junichi Fukami et al., Soft Science Inc., Tokyo)] based on the Tammes's method [Tammes, P.M.L.: Neth. J. Plant Path., 70, 73-80 (1964)]. Namely, several combinations of the compositions having different mixing ratios of Compound (I) and Compound (II) but exerting the same level of growth control effect, for example, 90 % growth control, were plotted in a graph so as to readily determine a synergistic effect, an arithmetic effect or a competitive effect. In case of exhibiting the synergistic effect, the equivalent efficacy line as plotted is shown below the arithmetic efficacy line.

Explaining further in detail with reference to the accompanying drawings, Fig. 1 wherein the ordinate indicates the dosage of mecoprop (potassium salt) and the abscissa indicates the dosage of Compound (1), the equivalent efficacy line (i.e. solid line) of 90 % growth control of pineappleweed is located under the arithmetic efficacy line (i.e. dotted line), from which it is understood that the associated use of Compound (1) and mecoprop in a certain mixing ratio produces the synergistic effect; Fig. 2 wherein the ordinate indicates the dosage of mecoprop (potassium salt) and the abscissa indicates the dosage of Compound (1), the equivalent efficacy line (i.e. solid line) of 90 % growth control of common chickweed is located under the arithmetic efficacy line (i.e. dotted line), from which it is understood that the associated use of

Compound (1) and mecoprop in a certain mixing ratio produces the synergistic effect; Fig. 3 wherein the ordinate indicates the dosage of 2,4-D (sodium salt) and the abscissa indicates the dosage of Compound (1), the equivalent efficacy line (i.e. solid line) of 90 % growth control of wild mustard is located under the arithmetic efficacy line (i.e. dotted line), from which it is understood that the associated use of Compound (1) and 2,4-D in a certain mixing ratio produces the synergistic effect; Fig. 4 of the accompanying drawing wherein the ordinate indicates the dosage of MCPA (ethyl ester) and the abscissa indicates the dosage of Compound (2), the equivalent efficacy line (i.e. solid line) of 90 % growth control of persian speedwell is located under the arithmetic efficacy line (i.e. dotted line), from which it is understood that the associated use of Compound (2) and MCPA in a certain mixing ratio produces the synergistic effect; Fig. 5 wherein the ordinate indicates the dosage of mecoprop (potassium salt) and the abscissa indicates the dosage of Compound (1), the equivalent efficacy line (i.e. solid line of 90 % growth control of catchweed bedstraw is located under the arithmetric efficacy line (i.e. dotted line), from which it is understood that the associated use of Compound (1) and mecoprop in a certain mixing ratio produces the synergistic effect; Fig. 6 wherein the ordinate indicates the dosage of MCPB (ethyl ester) and the abscissa indicates the dosage of Compound (1), the equivalent efficacy line (i.e. solid line) of 90 % growth control of shepherdspurse is located under the arithmetic efficacy line (i.e. dotted line), from which it is understood that the associated use of Compound (1) and MCPB in a certain mixing ratio produces the synergistic effect; likewise, Fig. 7 wherein the ordinate indicates the dosage of 2,4-DB (sodium salt) and the abscissa indicates the dosage of Compound (2), the equivalent efficacy line (i.e. solid line) of 90 % growth control of purple deadnettle is located under the arithmetic efficacy line (i.e. dotted line), from which it is understood that the associated use of Compound (2) and 2,4-DB in a certain mixing ratio produces the synergistic effect.

**Claims**

1. A herbicidal composition which comprises as the active ingredients a herbicidally effective amount of (a) at least one of the compounds of the general formula:

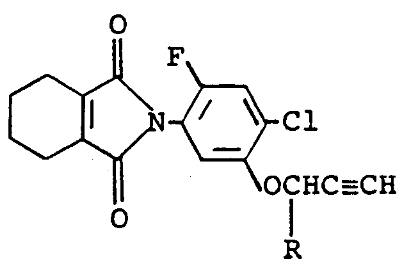

wherein R is a hydrogen atom or a methyl group and (b) at least one of the compounds of the general formula:

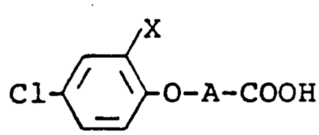

wherein X is a chlorine atom or a methyl group and A is $-CH_2-$,

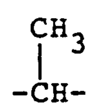

or $-(CH_2)_3-$, and their salts and esters, and an inert carrier or diluent.

2. The composition according to claim 1, wherein the weight proportion of the components (a) and (b) is from 1 : 1 to 10,000.

3. The composition according to claim 1, wherein the weight proportion of the components (a) and (b) is from 1 : 3 to 3,000.

4. The composition according to claim 1, wherein the component (b) is a member selected from the group consisting of 2-(4-chloro-o-tolyloxy)propionic acid, 2-(2,4-dichlorophenoxy)propionic acid, 4-chloro-o-tolyloxyacetic acid and 2,4-dichlorophenoxyacetic acid.

5. A method for controlling weeds which comprises applying a herbicidally effective amount of the composition according to claim 1 to weeds.

6. The method according to claim 5, wherein the weeds are those germinated in the field of wheat or barley.

7. The method according to claim 5, wherein the total amount of the components (a) and (b) is from 10 to 10,000 grams per hectare.

**Revendications**

1. Une composition herbicide qui comprend comme ingrédients actifs une quantité herbicide efficace de (a) au moins un des composés de formule générale :

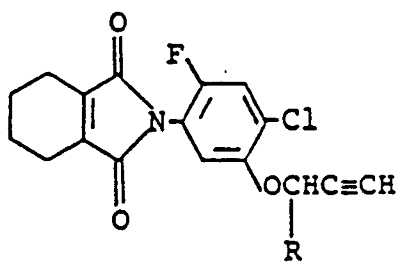

dans laquelle R est un atome d'hydrogène ou un groupe méthyle et de (b) au moins un des composés de formule générale :

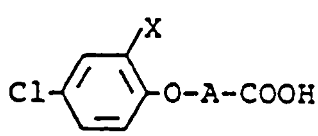

dans laquelle X est un atome de chlore, ou un groupe méthyle et A est $-CH_2-$,

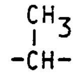

ou $-(CH_2)_3-$, et ses sels et esters, et un support ou diluant inerte.

2. La composition selon la revendication 1, selon laquelle la proportion pondérale des composants (a) et (b) est de 1:1 à 10 000.

3. La composition selon la revendication 1, selon laquelle la proportion pondérale des composants (a) et (b) est de 1:3 à 3 000.

4. La composition selon la revendication 1, selon laquelle le composant (b) est un élément choisi dans le groupe comprenant les suivants : acide 2-(4-chloro-o-tolyloxy)propionique, acide 2-(2,4-dichlorophénoxy)propionique, acide 4-chloro-o-tolyloxy-acétique et acide 2,4-dichlorophénoxyacétique.

5. Une méthode pour contrôler les mauvaises herbes qui comprend l'application d'une quantité herbicide efficace de la composition selon la revendication 1 à ces mauvaises herbes.

6. La méthode selon la revendication 5, selon laquelle, les mauvaises herbes sont celles qui ont germé dans le champ de blé ou d'orge.

7. La méthode selon la revendication 5, selon laquelle, la quantité totale de composants (a) et (b) est de 10 à 10 000 g par hectare.

**Patentansprüche**

1. Herbizide Zusammensetzung, die als aktives Ingrediens eine herbizid wirksame Menge von
(a) mindestens einer der Verbindungen der allgemeinen Formel:

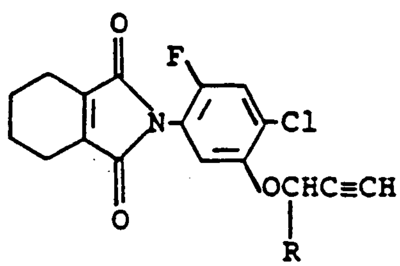

,

worin R ein Wasserstoffatom oder eine Methylgruppe bedeutet, und
(b) mindestens eine der Verbindungen der allgemeinen Formel:

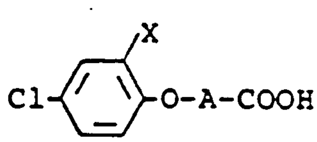

,

worin X ein Chloratom oder eine Methylgruppe darstellt und A für $-CH_2-$,

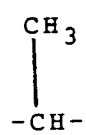

oder $-(CH_2)_3-$ steht, und ihre Salze und Ester und ein inertes Träger- oder Verdünnungsmittel umfaßt.

2. Zusammensetzung nach Anspruch 1, worin das Gewichtsverhältnis der Bestandteile (a) und (b) von 1 : 1 bis 10.000 ist.

3. Zusammensetzung nach Anspruch 1, worin das Gewichtsverhältnis der Bestandteile (a) und (b) von 1 : 3 bis 3.000 ist.

4. Zusammensetzung nach Anspruch 1, worin der Bestandteil (b) ausgewählt ist aus der Gruppe bestehend aus 2-(4-Chlor-o-tolyloxy)-propionsäure, 2-(2,4-Dichlorphenoxy)-propionsäure, 4-Chlor-o-tolyloxyessigsäure und 2,4-Dichlorphenoxyessigsäure.

5. Verfahren zur Bekämpfung von Unkraut, welches das Aufbringen einer herbizid wirksamen Menge der Zusammensetzung nach Anspruch 1 auf Unkraut umfaßt.

6. Verfahren nach Anspruch 5, worin das Unkraut ein solches ist, das auf dem Weizen- oder Gerstenfeld keimt.

7. Verfahren nach Anspruch 5, worin die Gesamtmenge der Bestandteile (a) und (b) von 10 bis 10.000 Gramm pro Hektar beträgt.

*Fig. 1*

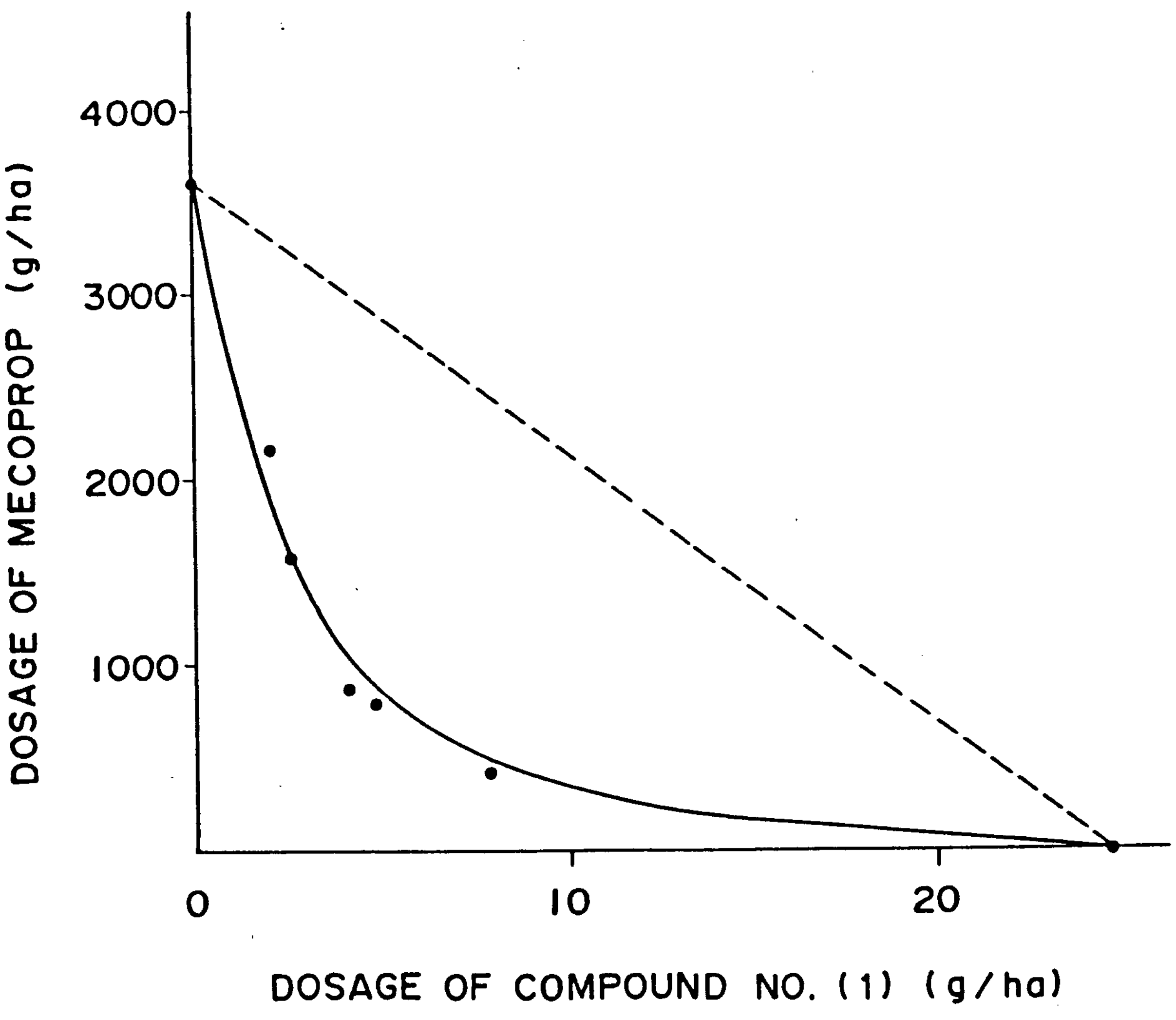
4000
3000
2000
1000
DOSAGE OF MECOPROP (g/ha)
0
10
20
DOSAGE OF COMPOUND NO. (1) (g/ha)

Fig. 2

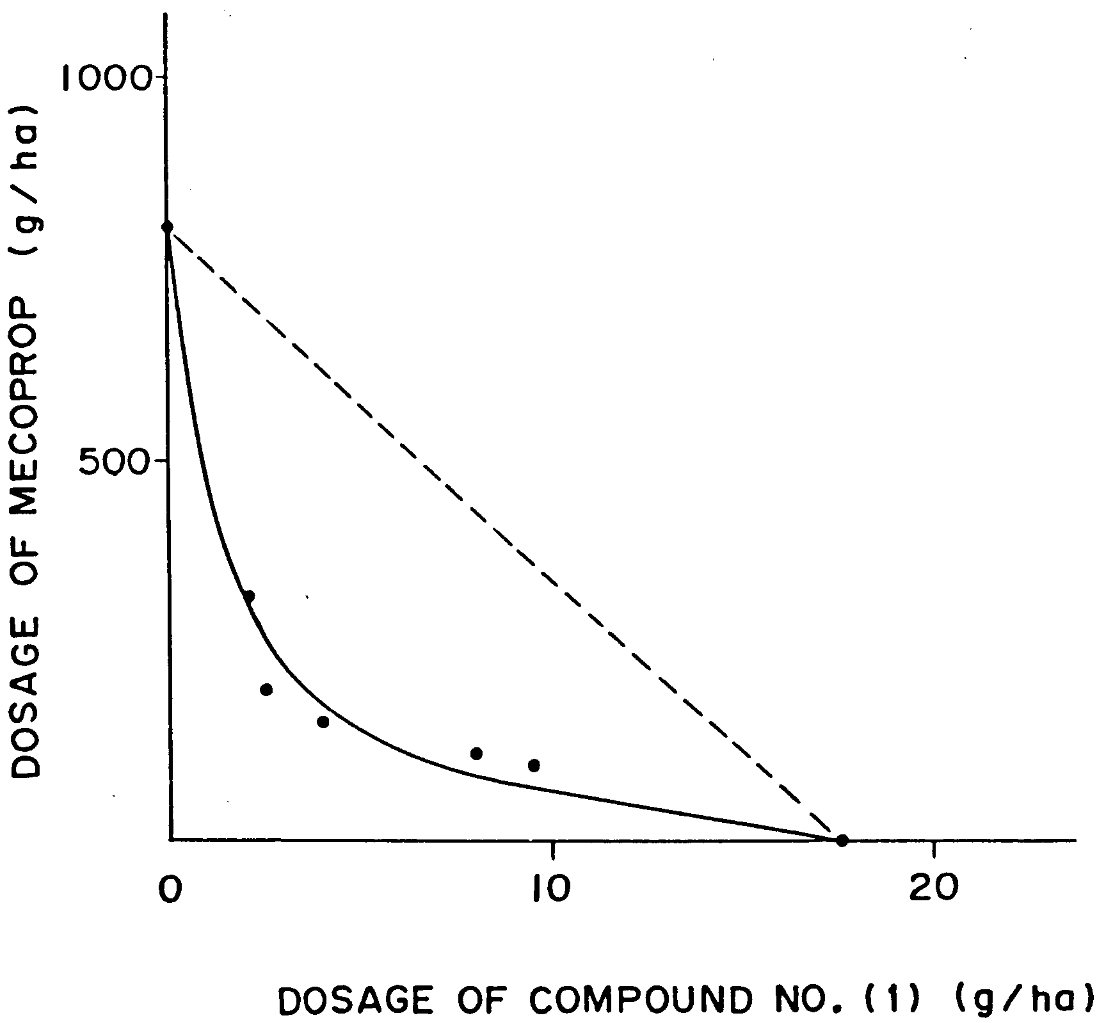
1000
500
DOSAGE OF MECOPROP (g/ha)
0
10
20
DOSAGE OF COMPOUND NO. (1) (g/ha)

*Fig. 3*

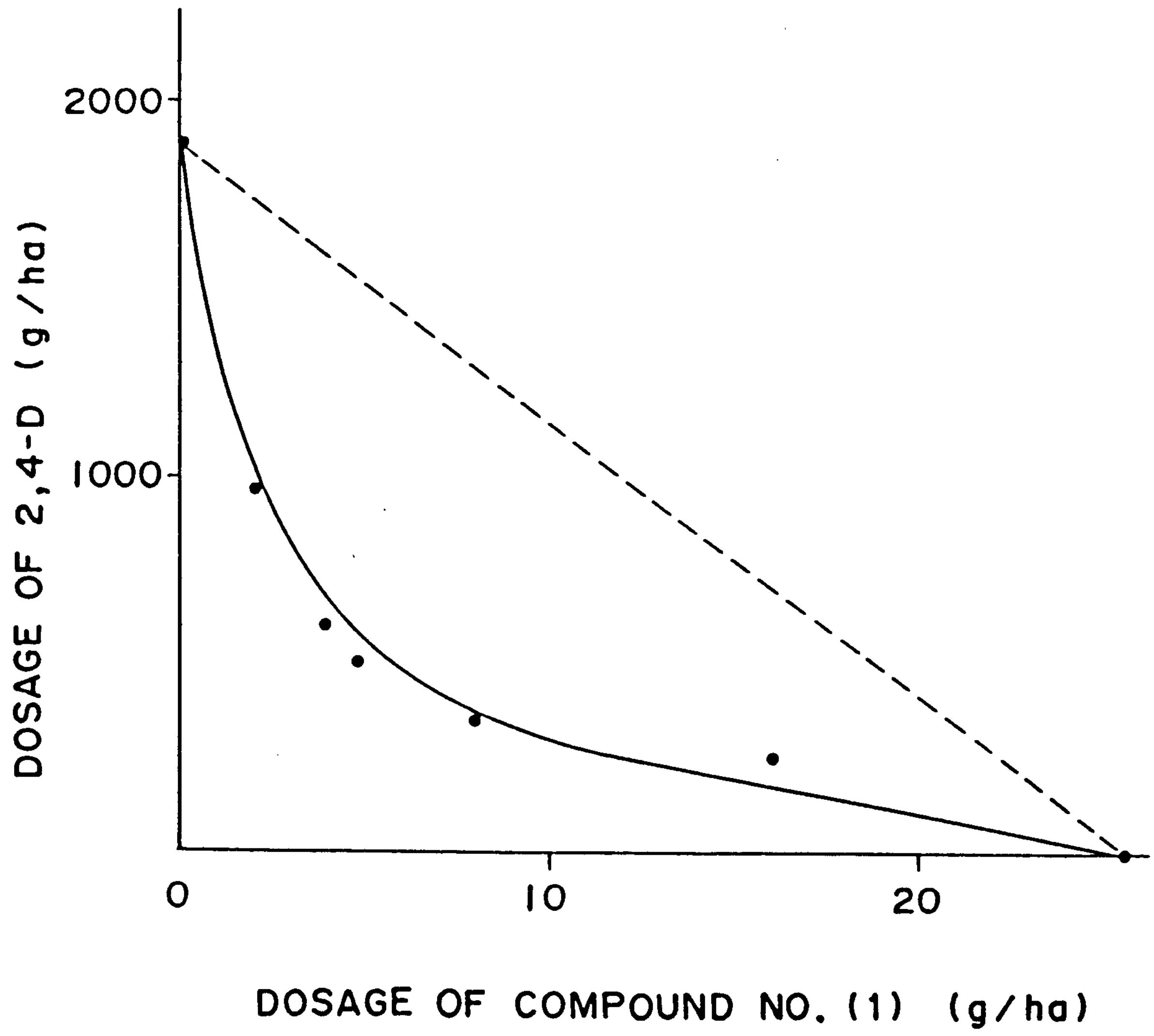

*Fig. 4*

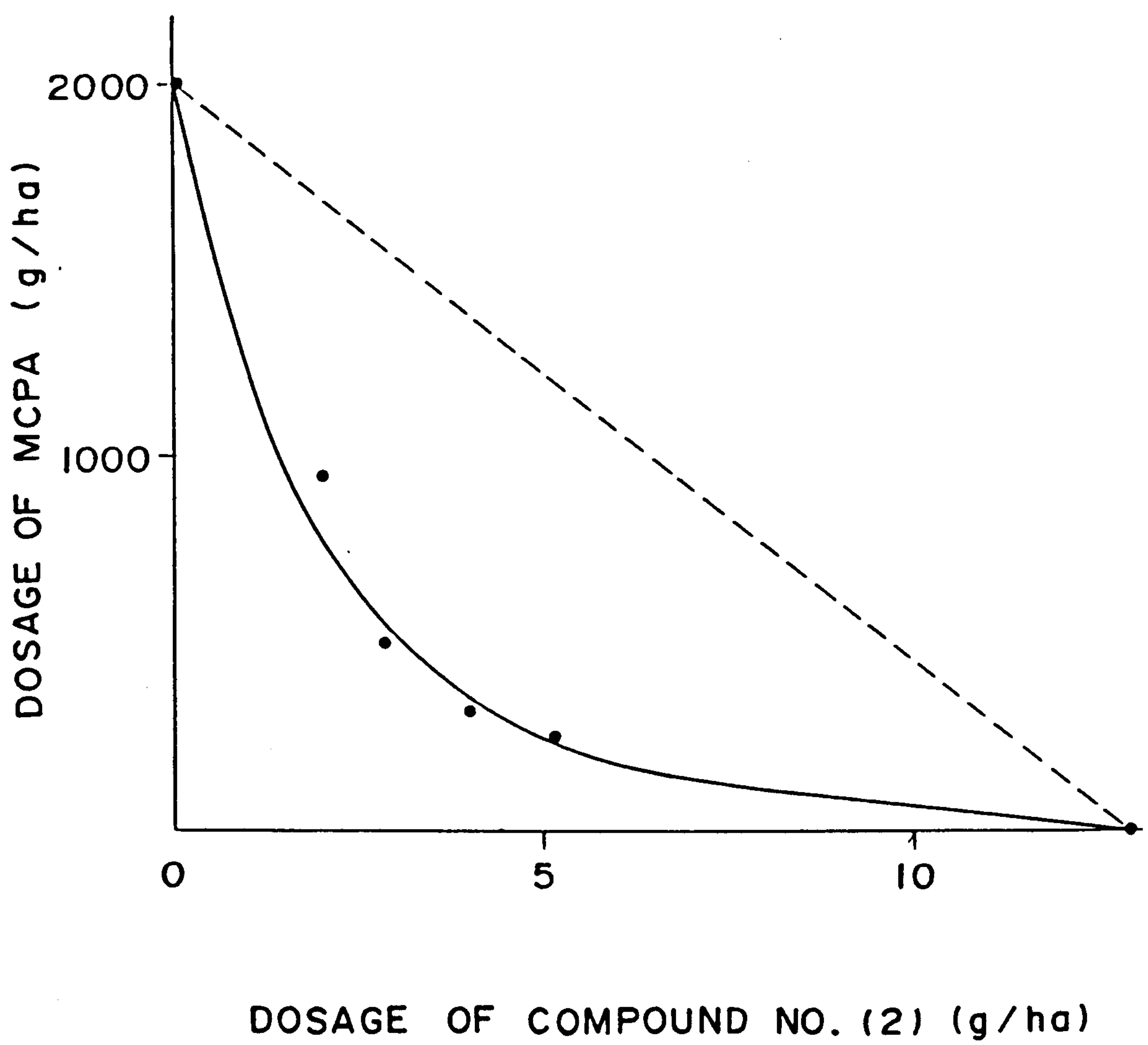

Fig. 5

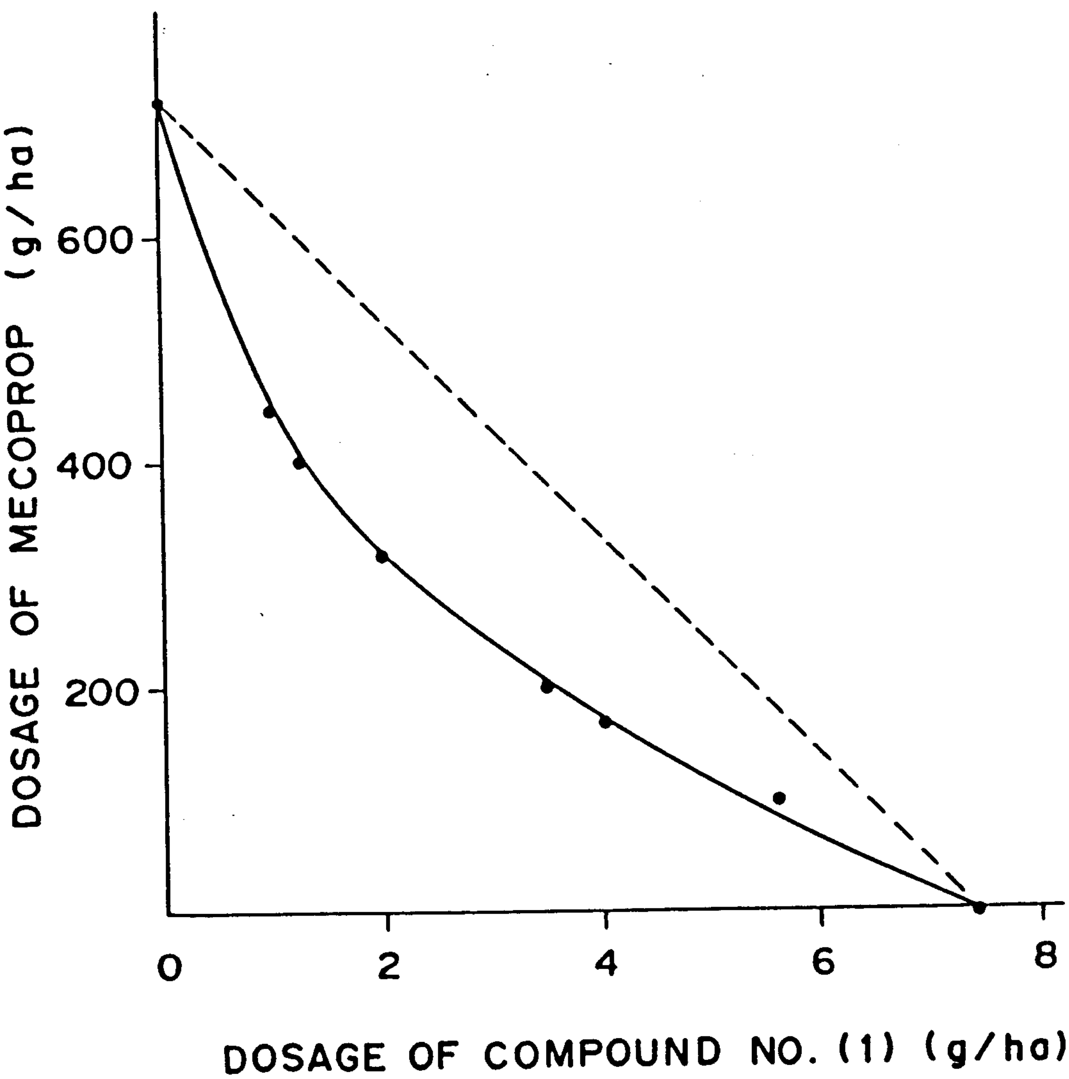
DOSAGE OF MECOPROP (g/ha)
600
400
200
0
2
4
6
8
DOSAGE OF COMPOUND NO. (1) (g/ha)

*Fig. 6*

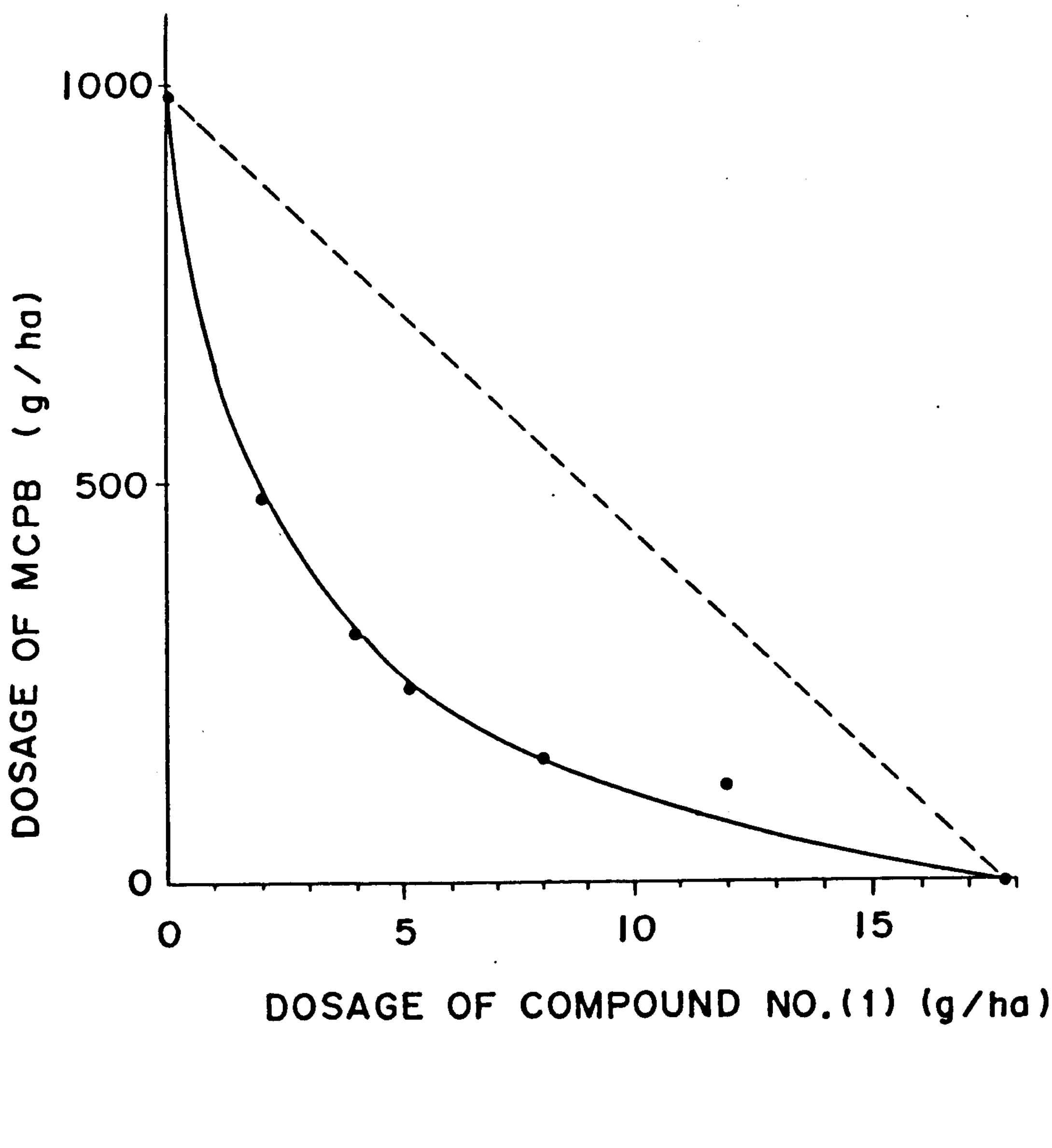
1000
500
0
0
5
10
15
DOSAGE OF MCPB (g/ha)
DOSAGE OF COMPOUND NO.(1) (g/ha)

*Fig. 7*

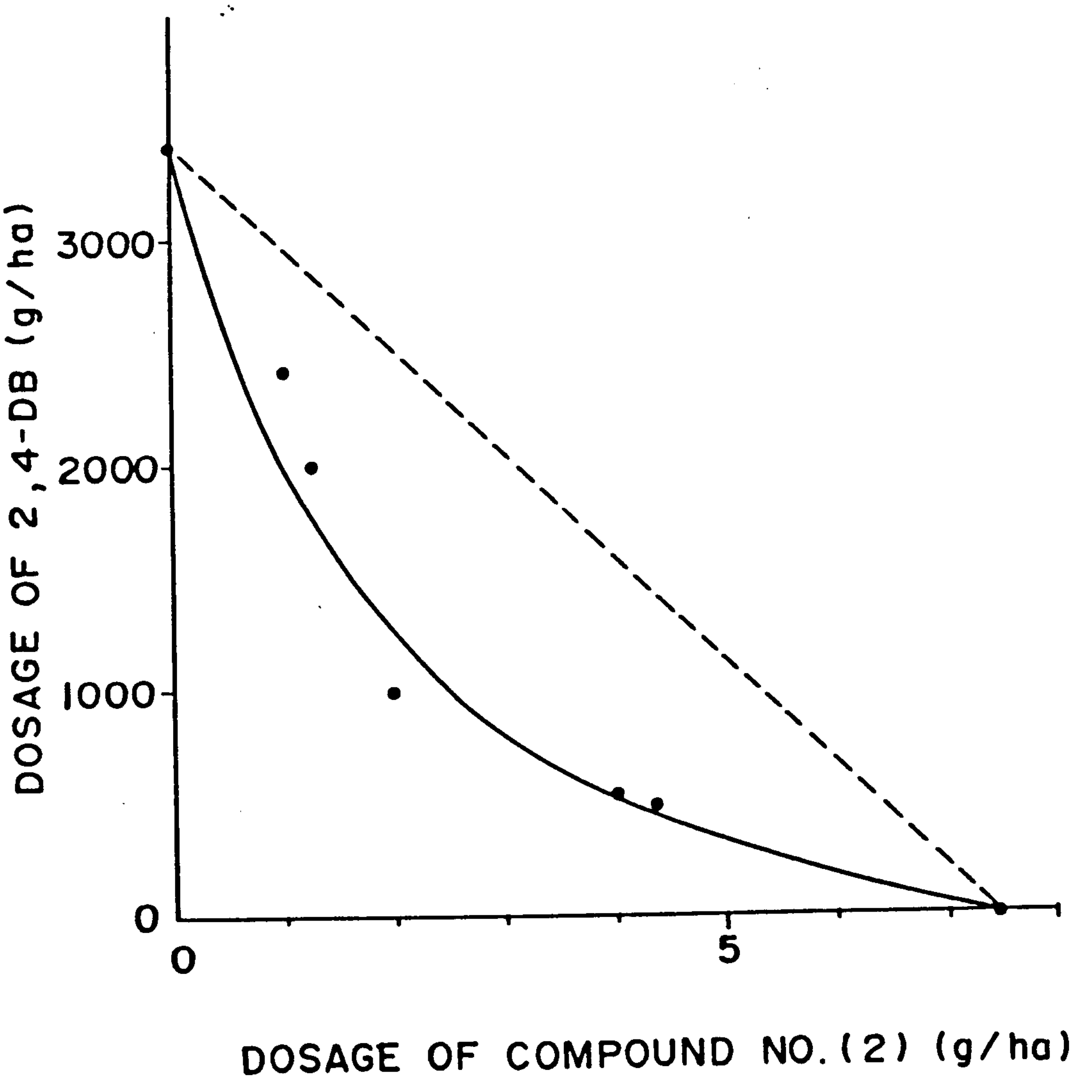
DOSAGE OF 2,4-DB (g/ha)
3000
2000
1000
0
0
5
DOSAGE OF COMPOUND NO.(2) (g/ha)